(19)

Europäisches
Patentamt
European
Patent Office
Office européen
des brevets

(11) **EP 4 220 621 A1**

(12) **EUROPEAN PATENT APPLICATION**
published in accordance with Art. 153(4) EPC

(43) Date of publication:
02.08.2023 Bulletin 2023/31

(21) Application number: 21872484.7

(22) Date of filing: 22.09.2021

(51) International Patent Classification (IPC):
G09G 5/00 (2006.01)     G09G 5/36 (2006.01)
G09G 3/20 (2006.01)     G09F 9/00 (2006.01)
G09F 9/40 (2006.01)     G02F 1/13 (2006.01)
G02F 1/133 (2006.01)     G02B 27/01 (2006.01)
G02B 30/30 (2020.01)     H04N 13/31 (2018.01)
H04N 13/317 (2018.01)     H04N 13/366 (2018.01)

(52) Cooperative Patent Classification (CPC):
G02B 27/01; G02B 30/30; G02F 1/13; G02F 1/133;
G09F 9/00; G09F 9/40; G09G 3/20; G09G 5/00;
G09G 5/36; H04N 13/31; H04N 13/317;
H04N 13/366

(86) International application number:
PCT/JP2021/034766

(87) International publication number:
WO 2022/065355 (31.03.2022 Gazette 2022/13)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 28.09.2020 JP 2020162617

(71) Applicant: Kyocera Corporation
Kyoto-shi Kyoto 612-8501 (JP)

(72) Inventors:
• KUSAFUKA, Kaoru
Kyoto-shi, Kyoto 612-8501 (JP)
• SATOU, Akinori
Kyoto-shi, Kyoto 612-8501 (JP)
• HAYASHISHITA, Ayuki
Kyoto-shi, Kyoto 612-8501 (JP)

(74) Representative: TBK
Bavariaring 4-6
80336 München (DE)

(54) **THREE-DIMENSIONAL DISPLAY DEVICE, THREE-DIMENSIONAL DISPLAY METHOD, THREE-DIMENSIONAL DISPLAY SYSTEM, AND MOBILE OBJECT**

(57)     A three-dimensional display device includes a display panel, a parallax barrier, an obtainer, and a controller. The controller assigns each of a plurality of subpixels to display a first image or a second image based on $I + \{L/(T \times V)\}$, where I is a value indicating a displacement of each of a plurality of transmissive portions from a corresponding subpixel of the plurality of subpixels, L is a distance by which a first eye and a second eye move in a parallax direction, T is a switching cycle between the first image and the second image, and Vis a number of variations of an index value indicating a position of switching between the first image and the second image in an active area.

FIG. 1

**Description**

TECHNICAL FIELD

The present disclosure relates to a three-dimensional (3D) display device, a 3D display method, a 3D display system, and a movable body.

BACKGROUND OF INVENTION

A known 3D display device for glasses-free 3D image viewing includes an optical element that directs a part of light from a display panel to reach a right eye and another part of the light to reach a left eye.
The emitted light is reflected by a reflector such as a mirror. The reflecting surface of the reflector generates distortion. The distortion is removed using, for example, another optical member.

SUMMARY

In an aspect of the present disclosure, a three-dimensional display device includes a display panel, an optical element, an obtainer, and a controller. The display panel causes a plurality of subpixels to display a first image and a second image having parallax with the first image. The display panel includes an active area including a plurality of divisional display portions. The optical element includes a plurality of transmissive portions defining a traveling direction of image light. The image light is emitted from each of the plurality of subpixels. The obtainer obtains a position of a first eye of a viewer and a position of a second eye of the viewer different from the first eye. The controller causes the first image and the second image to be displayed alternately in the active area based on the position of the first eye and the position of the second eye. The controller assigns each of the plurality of subpixels to display the first image or the second image based on $I + \{L/(T \times V)\}$, where $I$ is a value indicating a displacement of each of the plurality of transmissive portions from a corresponding subpixel of the plurality of subpixels, $L$ is a distance by which the first eye and the second eye move in a direction of the parallax, $T$ is a switching cycle between the first image and the second image, and $V$ is a number of variations of an index value indicating a position of switching between the first image and the second image in the active area.
In an aspect of the present disclosure, a three-dimensional display method includes causing a plurality of subpixels in a display panel to display a first image and a second image having parallax with the first image. The display panel includes an active area including a plurality of divisional display portions. The three-dimensional display method includes defining, with a plurality of transmissive portions in an optical element, a traveling direction of image light to be emitted from each of the plurality of subpixels. The three-dimensional display method includes obtaining, with an obtainer, a position of a first eye of a viewer and a position of a second eye of the viewer different from the first eye. The three-dimensional display method includes causing, with a controller, the first image and the second image to be displayed alternately in the active area based on the position of the first eye and the position of the second eye. With the three-dimensional display method, the controller assigns each of the plurality of subpixels to display the first image or the second image based on $I + \{L/(T \times V)\}$, where $I$ is a value indicating a displacement of each of the plurality of transmissive portions from a corresponding subpixel of the plurality of subpixels, $L$ is a distance by which the first eye and the second eye move in a direction of the parallax, $T$ is a switching cycle between the first image and the second image, and $V$ is a number of variations of an index value indicating a position of switching between the first image and the second image.
In an aspect of the present disclosure, a three-dimensional display system includes the above three-dimensional display device.
In an aspect of the present disclosure, a movable body includes the above three-dimensional display device.

BRIEF DESCRIPTION OF THE DRAWINGS

The objects, features, and advantages of the present disclosure will become more apparent from the following detailed description and the drawings.

FIG. 1 is a schematic diagram of a 3D display system according to an embodiment of the present disclosure viewed in a vertical direction.
FIG. 2 is a diagram of a display panel illustrated in FIG. 1 viewed in a depth direction.
FIG. 3 is a diagram of an example parallax barrier illustrated in FIG. 1 viewed in the depth direction.
FIG. 4 is a diagram describing first viewable portions in the display panel illustrated in FIG. 1.
FIG. 5 is a diagram describing second viewable portions in the display panel illustrated in FIG. 1.
FIG. 6 is a diagram describing binocular viewable portions in the 3D display system illustrated in FIG. 1.

FIG. 7 is a diagram of phases of subpixels in the display panel with all the subpixels located in transmissive portions.
FIG. 8 is a diagram of phases with respect to the center of each transmissive portion viewed with a first eye at an optimum viewing distance.
FIG. 9 is a diagram of phases after movement of the first eye.
FIG. 10 is a diagram of phases with an ideal parallax barrier for subpixels in the display panel.
FIG. 11 is a diagram of displacement phases from the ideal parallax barrier.
FIG. 12 is a diagram of phases for different eye positions.
FIG. 13 is a diagram of an example HUD incorporating the 3D display system according to the embodiment.
FIG. 14 is a diagram of an example movable body incorporating the HUD illustrated in FIG. 13.

DESCRIPTION OF EMBODIMENTS

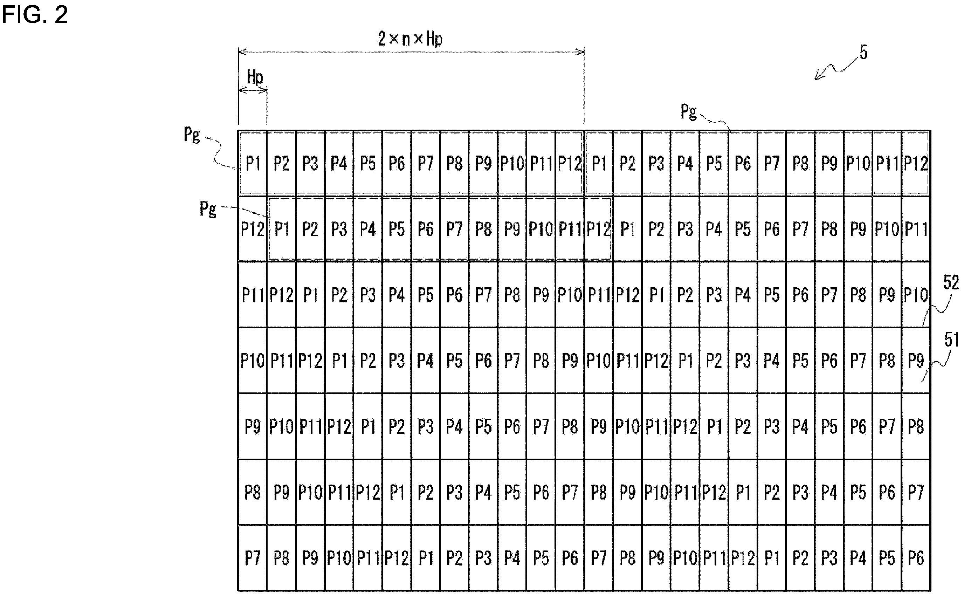

One or more embodiments of the present disclosure will now be described with reference to the drawings.

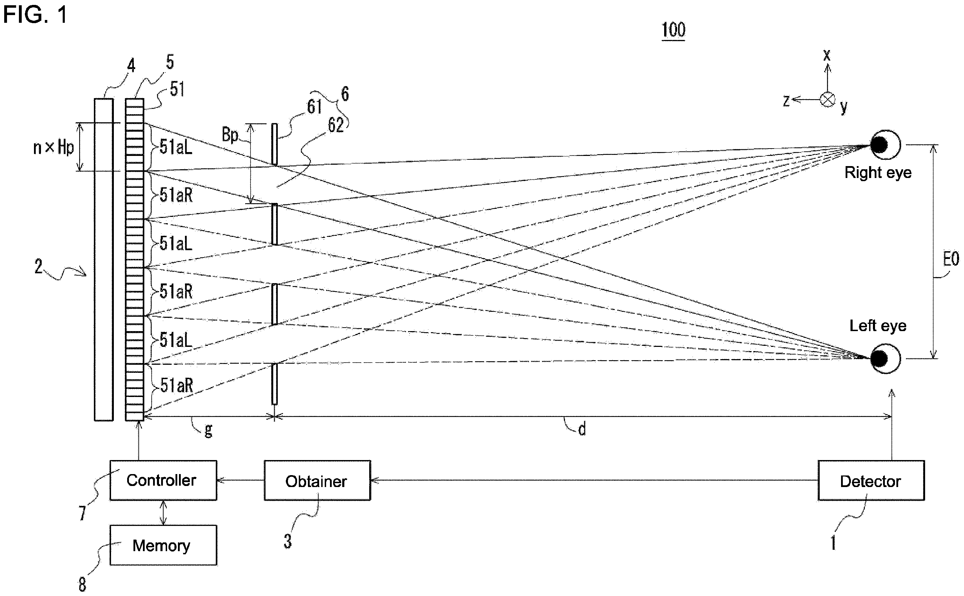

FIG. 1 is a schematic diagram of a three-dimensional (3D) display system according to an embodiment of the present disclosure viewed in a vertical direction. A 3D display system 100 according to the present embodiment includes a detector 1 and a 3D display device 2.
The detector 1 detects the positions of a first eye and a second eye of a viewer. The first eye may be a left eye or a right eye. The second eye may be the eye other than the first eye. Although the first eye is the left eye and the second eye is the right eye in the embodiments described below, the eyes may be defined differently. Information about the detected positions of the first eye and the second eye is output to the 3D display device 2. The detector 1 may include, for example, a camera. The detector 1 may capture an image of the face of the viewer with the camera. The detector 1 may use the image including the viewer's face captured with the camera to detect the positions of the first eye and the second eye. The detector 1 may use an image captured with a single camera to detect the positions of the first eye and the second eye as coordinates in a 3D space. The detector 1 may use images captured with two or more cameras to detect the positions of the first eye and the second eye as coordinates in a 3D space.
The detector 1 may include no camera and may be connected to an external camera. The detector 1 may include an input terminal for receiving signals from the external camera. The external camera may be connected to the input terminal directly. The external camera may be connected to the input terminal indirectly through a shared information communication network. The detector 1 including no camera may include an input terminal for receiving image signals from the external camera. The detector 1 including no camera may use the image signals received through the input terminal to detect the positions of the first eye and the second eye.
The detector 1 may include, for example, a sensor. The sensor may be an ultrasonic sensor or an optical sensor. The detector 1 may detect the position of the viewer's head with the sensor, and detect the positions of the first eye and the second eye based on the position of the head. The detector 1 may use a single sensor or two or more sensors to detect the positions of the first eye and the second eye as coordinates in a 3D space.
The 3D display system 100 may not include the detector 1. When the 3D display system 100 does not include the detector 1, the 3D display device 2 may include an input terminal for receiving signals from an external detector connected to the input terminal. The external detector may be connected to the input terminal. The external detector may use electrical signals or optical signals as transmission signals transmitted to the input terminal. The external detector may be connected to the input terminal indirectly through a shared network. The 3D display device 2 may receive positional coordinates indicating the positions of the first eye and the second eye input from the external detector.
The 3D display device 2 includes an obtainer 3, an illuminator 4, a display panel 5, a parallax barrier 6 as an optical element, a controller (controller) 7, and a memory 8.
The obtainer 3 obtains the positions of the first eye and the second eye detected by the detector 1.
The illuminator 4 illuminates the display panel 5 with planar illumination light. The illuminator 4 may include, for example, a light source, a light guide plate, a diffuser plate, and a diffuser sheet. The illuminator 4 emits illumination light using the light source and spreads the illumination light uniformly for illuminating the surface of the display panel 5 using, for example, the light guide plate, the diffuser plate, or the diffuser sheet. The illuminator 4 emits the uniform light toward the display panel 5.
The display panel 5 may be, for example, a transmissive liquid crystal display panel. As illustrated in FIG. 2, the display panel 5 includes a planar active area 51 including multiple divisional portions. The active area 51 can display a composite image. The composite image includes a first image and a second image that has parallax with the first image (described later). The composite image includes a third image (described later). The divisional portions are defined in a lattice-like black matrix 52 in a first direction and in a second direction intersecting with the first direction. The direction intersecting with the first and second directions is referred to as a third direction. The first direction may be referred to as a horizontal direction. The second direction may be referred to as a vertical direction. The third direction may be referred to as a depth direction. However, the first, second, and third directions are not limited to the directions referred to above. In the drawings, the first direction may refer to x-direction, the second direction to y-direction, and the third direction to z-direction.

Each divisional portion corresponds to a subpixel. Thus, the active area 51 includes multiple subpixels arranged in a lattice in the horizontal and vertical directions.

Each subpixel has one of the colors red (R), green (G), and blue (B). One pixel may be a set of three subpixels with R, G, and B. One pixel may be referred to as a picture element. For example, multiple subpixels included in one pixel are arranged in the horizontal direction. For example, subpixels having the same color are arranged in the vertical direction. The display panel 5 is not limited to a transmissive liquid crystal panel but may be another display panel such as an organic electroluminescent (EL) display. For the display panel 5 being a self-luminous display panel, the 3D display device 2 may not include the illuminator 4.

As described above, multiple subpixels arranged in the active area 51 form subpixel groups Pg. The subpixel groups Pg are repeatedly arranged in the horizontal direction. The subpixel groups Pg are repeatedly arranged in the vertical direction at positions shifted by one subpixel in the horizontal direction from the corresponding subpixels. The subpixel groups Pg each include subpixels in predetermined rows and columns. More specifically, the subpixel groups Pg each include $(2 \times n \times b)$ subpixels P1 to P$(2 \times n \times b)$, which are consecutively arranged in b row(s) in the vertical direction and in $2 \times n$ columns in the horizontal direction. In the example illustrated in FIG. 2, n is 6, and b is 1. The active area 51 includes the subpixel groups Pg each including one subpixel in the vertical direction and 12 continuous subpixels P1 to P12 arranged in the horizontal direction. In the example illustrated in FIG. 2, some of the subpixel groups Pg are denoted by reference signs.

Each subpixel group Pg is the smallest unit controllable by the controller 7 (described later) to display an image. The subpixels P1 to P$(2 \times n \times b)$ included in each subpixel group Pg with the same identification information are controlled by the controller 7 at the same time. For example, the controller 7 switches the image to be displayed by the subpixels P1 from the first image to the second image at the same time in all the subpixel groups Pg.

As illustrated in FIG. 1, the parallax barrier 6 is planar along the active area 51. The parallax barrier 6 is separate from the active area 51 by a predetermined distance (gap) of g. The parallax barrier 6 may be located opposite to the illuminator 4 from the display panel 5. The parallax barrier 6 may be located between the display panel 5 and the illuminator 4.

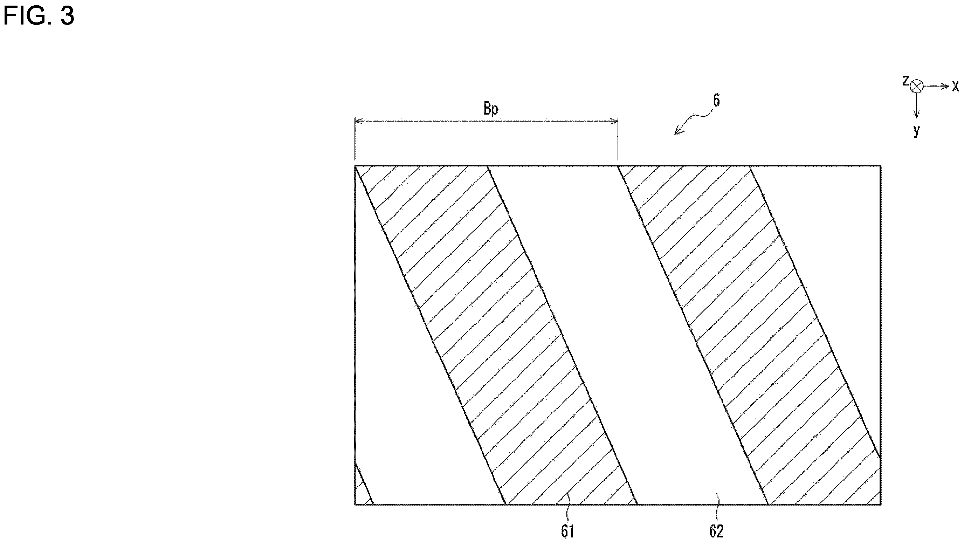

The parallax barrier 6 defines a traveling direction of image light emitted from the subpixels for each of multiple transmissive portions 62. The traveling direction is the direction in which image light travels. As illustrated in FIG. 3, the transmissive portions 62 are strip areas each elongated in a predetermined direction in the plane. The predetermined direction is at a predetermined angle other than zero with the vertical direction. As illustrated in FIG. 1, the parallax barrier 6 defines the direction of image light emitted from each of the subpixels arranged in the active area 51 to define parts of the active area 51 viewable with the eyes of the viewer. Portions in the active area 51 emitting image light that reaches the positions of the eyes of the viewer are hereafter referred to as viewable portions 51a. Portions in the active area 51 emitting image light that reaches the position of the first eye of the viewer are referred to as first viewable portions 51aL. Portions in the active area 51 emitting image light that reaches the position of the second eye of the viewer are referred to as second viewable portions 51aR. Although the first viewable portions 51aL are denoted with reference sign L and the second viewable portions 51aR with reference sign R based on the first eye being the left eye and the second eye being the right eye in the embodiments of the present disclosure, the embodiments are not limited to this example. For example, the first viewable portions 51aL correspond to the first eye that may be either the left eye or the right eye.

More specifically, as illustrated in FIG. 3, the parallax barrier 6 includes multiple light-blocking portions 61 for blocking image light. The multiple light-blocking portions 61 define transmissive portions 62 between adjacent light-blocking portions 61. The transmissive portions 62 have a higher light transmittance than the light-blocking portions 61. The light-blocking portions 61 have a lower light transmittance than the transmissive portions 62.

The transmissive portions 62 are parts of the parallax barrier 6 to transmit light incident on the parallax barrier 6. The transmissive portions 62 may transmit light with a transmittance of a first predetermined value or greater. The first predetermined value may be, for example, substantially 100% or a value less than 100%. The first predetermined value can be a value less than 100%, such as 80% or 50%, when the image light emitted from the active area 51 falls within the range of good visibility. The light-blocking portions 61 are parts of the parallax barrier 6 to substantially block light incident on the parallax barrier 6. In other words, the light-blocking portions 61 prevent an image displayed in the active area 51 in the display panel 5 from being viewable with the eyes of the viewer. The light-blocking portions 61 may block light with a transmittance of a second predetermined value or less. The second predetermined value may be, for example, substantially 0% or a greater value close to 0%, such as 0.5%, 1%, or 3%. The first predetermined value may be several times, or for example, 10 times, greater than the second predetermined value.

The transmissive portions 62 and the light-blocking portions 61 extend in a predetermined direction along the active area 51. The transmissive portions 62 and the light-blocking portions 61 are arranged alternately in a direction orthogonal to the predetermined direction. The transmissive portions 62 define the traveling direction of image light emitted from each of the subpixels.

As illustrated in FIG. 1, a barrier pitch Bp as an interval at which the transmissive portions 62 are arranged in the horizontal direction and the gap g between the active area 51 and the parallax barrier 6 are determined to satisfy Formula 1 and Formula 2 below using an optimum viewing distance d and a reference distance E0.

$$E0:d = (n \times Hp):g \qquad (1)$$

$$d:Bp = (d + g):(2 \times n \times Hp) \qquad (2)$$

The optimum viewing distance d is the distance between the first eye or the second eye of the viewer and the parallax barrier 6. At the optimum viewing distance d, the horizontal length of each viewable portion 51a is equivalent to the horizontal length of n subpixels. The direction of a straight line passing through the first eye and the second eye (interocular direction) corresponds to the horizontal direction. The reference distance E0 is a reference interocular distance E of the viewer. The reference distance E0 may be, for example, 61.1 to 64.4 mm, as calculated through studies conducted by the National Institute of Advanced Industrial Science and Technology. Hp is the horizontal length of a subpixel as illustrated in FIG. 2.

The parallax barrier 6 may be a film or a plate with a transmittance less than the second predetermined value. In this case, the light-blocking portions 61 are parts of the film or plate. The transmissive portions 62 are slits in the film or plate. The film may be made of resin or another material. The plate may be made of resin, metal, or another material. The parallax barrier 6 may be a member other than a film or a plate. The parallax barrier 6 may include a base made of a light-blocking material or of a material containing an additive with light-blocking properties.

The parallax barrier 6 may be, for example, a liquid crystal shutter. The liquid crystal shutter can control the light transmittance in accordance with a voltage being applied. The liquid crystal shutter may include multiple pixels and control the transmittance of light for each pixel. The liquid crystal shutter can form a portion with a high light transmittance or a portion with a low light transmittance in an intended shape. For the parallax barrier 6 being a liquid crystal shutter, the transmissive portions 62 may have a transmittance of the first predetermined value or greater. For the parallax barrier 6 being a liquid crystal shutter, the light-blocking portions 61 may have a transmittance of the second predetermined value or less.

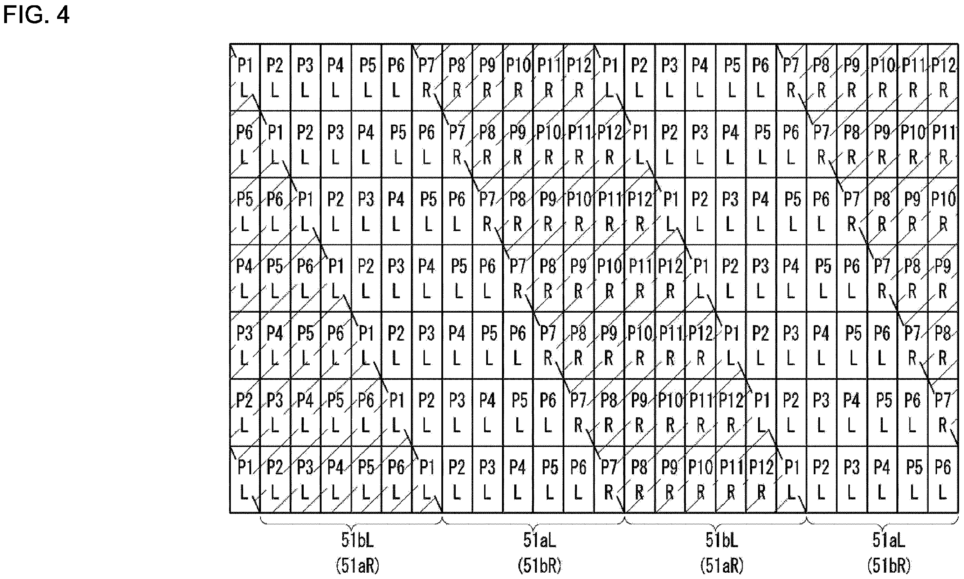

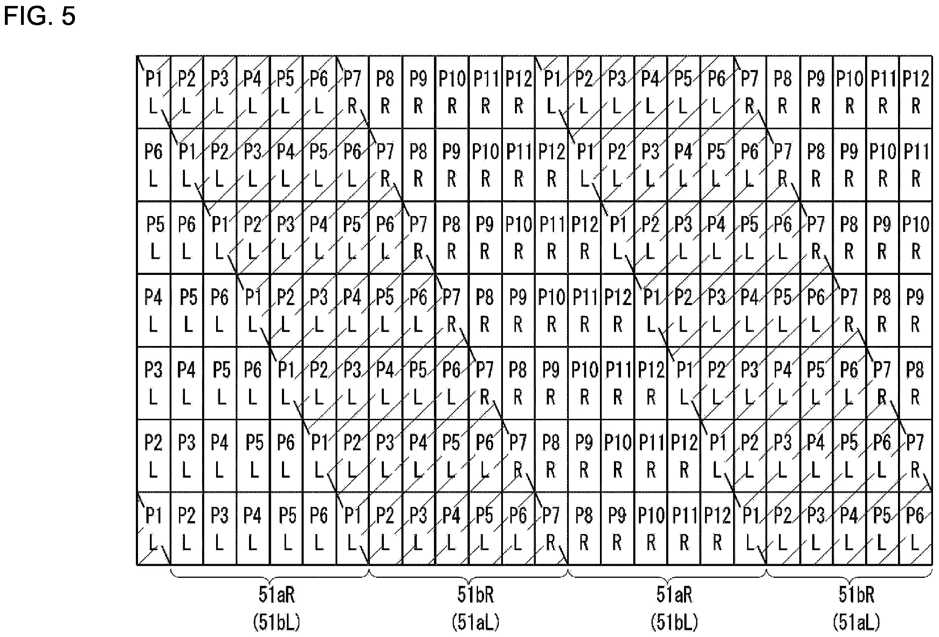

In this structure, the parallax barrier 6 transmits image light emitted from selected subpixels in the active area 51 through the transmissive portions 62 to reach the second eye of the viewer. The parallax barrier 6 transmits image light emitted from the other subpixels through the transmissive portions 62 to reach the first eye of the viewer. An image viewable to the viewer when the image light reaches each of the viewer's first and second eyes will now be described in detail with reference to FIGs. 4 and 5.

As described above, the first viewable portions 51aL in FIG. 4 are defined in the active area 51 that are viewable with the first eye of the viewer when image light transmitted through the transmissive portions 62 in the parallax barrier 6 reaches the first eye of the viewer. First less-viewable portions 5 1bL are less viewable with the first eye of the viewer when image light is blocked by the light-blocking portions 61 in the parallax barrier 6. The first viewable portions 51aL include a half of the subpixels P1, all of the subpixels P2 to P6, and a half of the subpixels P7.

The second viewable portions 51aR in FIG. 5 are defined in the active area 51 that are viewable with the second eye of the viewer when image light from other subpixels transmitted through the transmissive portions 62 in the parallax barrier 6 reaches the second eye of the viewer. Second less-viewable portions 51bR are less viewable with the second eye of the viewer when image light is blocked by the light-blocking portions 61 in the parallax barrier 6. The second viewable portions 51aR include a half of the subpixels P7, all of the subpixels P8 to P12, and a half of the subpixels P1. Although the first less-viewable portions 51bL are denoted with reference sign L and the second less-viewable portions 51bR with reference sign R based on the first eye being the left eye and the second eye being the right eye in the embodiments, the embodiments are not limited to this example. For example, the first less-viewable portions 5 1bL correspond to the first eye that may be either the left eye or the right eye.

The first image displayed by the subpixels P1 to P6 are viewable with the first eye. The second image displayed by the subpixels P7 to P12 are viewable with the second eye. The first image and the second image have parallax between them and are included in a parallax image. More specifically, the first eye views a half of the first image displayed by the subpixels P1, all the first image displayed by the subpixels P2 to P6, and a half of the second image displayed by the subpixels P7. The second eye views a half of the second image displayed by the subpixels P7, all the second image displayed by the subpixels P8 to P12, and a half of the first image displayed by the subpixels P1. In FIGs. 4 and 5, subpixels to display the first image are each given reference sign L, and subpixels to display the second image are each given reference sign R. Although the first image is denoted with reference sign L and the second image with reference sign R based on the first eye being the left eye and the second eye being the right eye in the embodiments of the present disclosure, the embodiments are not limited to this example.

In this state, the first eye of the viewer views the largest area of the first image, and the smallest area of the second image. The second eye of the viewer views the largest area of the second image, and the smallest area of the first image. Thus, the viewer can view a 3D image with least crosstalk.

In the 3D display device 2 with the structure described above, the viewer with the interocular distance E being the reference distance E0 can appropriately view a 3D image when the first image is displayed by subpixels included in the first viewable portions 51aL and the second image having parallax with the first image is displayed by subpixels included in the second viewable portions 5 1aR. In the structure described above, the first image is displayed by subpixels with at least its half being viewable with the first eye, and the second image is displayed by subpixels with at least its half being viewable with the second eye. In some embodiments, subpixels to display the first image or the second image may be determined as appropriate to minimize crosstalk based on the first viewable portions 51aL and the second viewable portions 51aR in accordance with the design of, for example, the active area 51 and the parallax barrier 6. For example, the first image may be displayed by subpixels with at least a predetermined proportion being viewable with the first eye, and the second eye image may be displayed by subpixels with at least a predetermined proportion being viewable with the second eye in accordance with the aperture ratio or other factors of the parallax barrier 6.

The controller 7 may be connected to each of the components of the 3D display system 100, and control these components. The components controlled by the controller 7 include the detector 1 and the display panel 5. The controller 7 may be, for example, a processor. The controller 7 may include one or more processors. The processors may include a general-purpose processor that reads a specific program and performs a specific function, and a processor dedicated to specific processing. The dedicated processor may include an application-specific integrated circuit (ASIC). The processors may include a programmable logic device (PLD). The PLD may include a field-programmable gate array (FPGA). The controller 7 may be either a system on a chip (SoC) or a system in a package (SiP) in which one or more processors cooperate with other components. The controller 7 may include a storage to store various items of information or programs to operate each component of the 3D display system 100. The storage may be, for example, a semiconductor memory. The storage may serve as a work memory for the controller 7.

The memory 8 may include any storage such as a random-access memory (RAM) or a read-only memory (ROM).

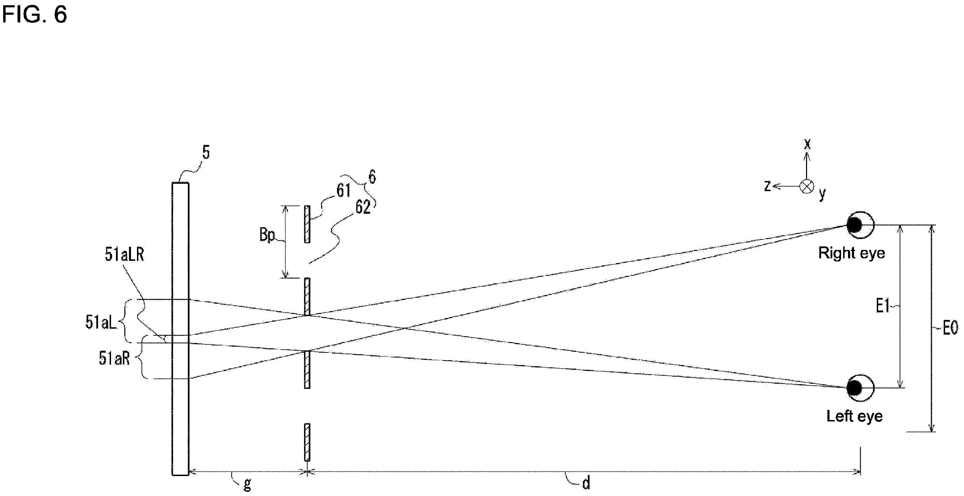

As illustrated in FIG. 6, with the interocular distance E of the viewer being an interocular distance E1 different from the reference distance E0, a part of the first viewable portions 51aL and a part of the second viewable portions 51aR may overlap each other to define a binocular viewable portion 51aLR. Thus, some subpixels are left subpixels (first subpixels) determined to display the first image based on the first viewable portions 51aL and are also right subpixels (second subpixels) determined to display the second image based on the second viewable portions 51aR. The left subpixels are, for example, subpixels with at least a predetermined proportion (e.g., a half) being in the first viewable portions 51aL. The right subpixels are, for example, subpixels with at least a predetermined proportion being in the second viewable portions 51aR.

In this structure, with the second image displayed by subpixels that are left subpixels and also right pixels, the proportion of the second image viewable with the first eye increases. With the first image displayed by subpixels that are left subpixels and also right pixels, the proportion of the first image viewable with the second eye increases. Thus, when either the left image or the second image is displayed by the overlapping subpixels, crosstalk may increase. The controller 7 performs control to reduce crosstalk that may occur when the viewer with the interocular distance E1 views the 3D display device 2 designed based on the reference distance E0. The controller 7 will now be described in detail.

The controller 7 performs control to increase or decrease the phase value of each subpixel from the initial value by the displacement being the remainder of the distance, by which the viewer's eyes move, divided by a switching cycle T divided by the number of variations of an index value to cause the subpixels to display the first image and the second image. The control of subpixels performed by increasing or decreasing each phase value from the initial value in the 3D display device will now be described.

The 3D display device according to the present embodiment includes the display panel 5, the parallax barrier 6, the obtainer 3, and the controller 7. The display panel 5 includes multiple subpixels that display the first image and the second image having parallax with the first image. The display panel 5 includes the active area 51 including multiple divisional display portions. The parallax barrier 6 is an optical element including multiple transmissive portions 62 that define the traveling direction of image light emitted from each of the multiple subpixels. The obtainer 3 obtains the position of the first eye of the viewer and the position of the second eye of the viewer different from the first eye. The controller 7 causes the first image and the second image to be displayed alternately in the active area 51 based on the positions of the first eye and the second eye.

In the embodiments, I is the phase representing the displacement of a transmissive portion 62 from the corresponding subpixel, L is the distance by which the first eye and the second eye move in the parallax direction, T is the switching cycle between the first image and the second image, and V is the number of variations of the index value indicating the position of switching between the first image and the second image in the active area 51. The controller 7 determines the phase to satisfy the Formula 3 below.

$$I + \{L/(T \times V)\} \qquad\qquad (3)$$

The controller 7 assigns each of the subpixels to display either the first image or the second image based on the determined phase.

The memory 8 stores a table showing the correspondence between the positions of the first eye and the second eye at the reference distance from the first eye and the image to be displayed by the subpixels arranged in the active area 51. The controller 7 may use the table to determine the first subpixels based on the position of the first eye, and the second subpixels based on the position of the second eye.

The controller 7 may cause either the first image or the second image to be displayed as the third image based on the characteristics of the viewer. The controller 7 may cause third subpixels to display, for example, a black image as the third image. The black image is, for example, a black image with a predetermined luminance level. The predetermined luminance level may be a luminance level with the lowest gradation displayable by the subpixels, or a value corresponding to the luminance level with the gradation equivalent to the lowest gradation. The controller 7 may cause the third subpixels to display the black image.

The controller 7 may cause the third subpixels to display either the first image or the second image as the third image based on the characteristics of the viewer. The characteristics of the viewer include, for example, a dominant eye of the viewer. More specifically, the controller 7 may cause, based on information about the dominant eye of the viewer preset or input from an external source, either the first image or the second image corresponding to the dominant eye to be displayed. The controller 7 may cause the first image to be displayed as the third image when the viewer has a dominant eye being the first eye. The controller 7 may cause the second image to be displayed as the third image when the viewer has a dominant eye being the second eye.

The controller 7 may cause the third subpixels to display an average image as the third image. The average image has an average luminance value of the first image and the second image.

The controller 7 may display the average image as the third image. The average image has an average luminance value of the first image and the second image.

The controller 7 may cause the first image to be displayed using, as the position of the first eye, a first projection position at which the position of the first eye is projected on a plane that is parallel to the active area 51 and located at the optimum viewing distance d from the parallax barrier 6, and the second image to be displayed using, as the position of the second eye, a second projection position at which the position of the second eye is projected on the plane.

The controller 7 may use the values of displacement I at at least three points, or specifically the center of the active area 51, a first outer edge that is the farthest point from the center in the parallax direction toward the first eye, and a second outer edge that is the farthest point from the center in the parallax direction toward the second eye, to assign each of the subpixels to display either the first image or the second image.

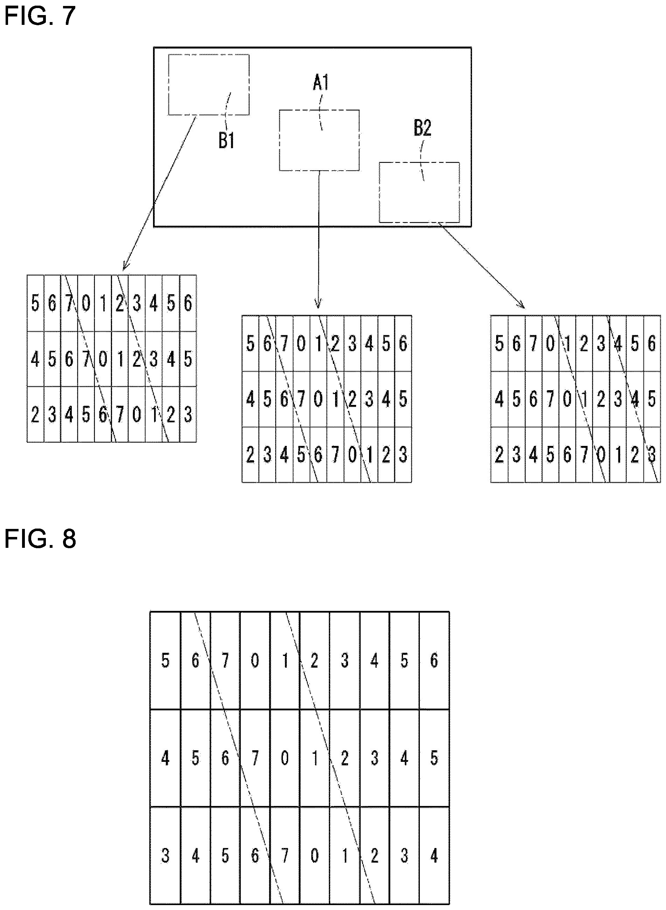

With the structure that forms the basis of one or more embodiments of the present disclosure, as illustrated in FIG. 7, designing the parallax barrier 6 that causes all the subpixels in the display panel 5 to be in the transmissive portions 62 is difficult due to distortion of the optical system and other factors. For a central area A1 and peripheral areas B1 and B2 in the display panel 5, the positional relationships between the parallax barrier 6 and the subpixels vary, thus causing crosstalk. The position of the parallax barrier 6 may be corrected by measuring the displacement of the parallax barrier 6 from its ideal position. However, evaluating and correcting a positional displacement of a few micrometers is rather difficult. The active area 51 in the display panel 5 is divided into nine portions to possibly reduce crosstalk. However, updating the entire display panel 5 at, for example, every 15.75 mm allows limited improvement.

Thus, the 3D display device according to one or more embodiments of the present disclosure allows the phase to be defined as the distance from the center of each transmissive portion 62 as viewed with the first eye (e.g., the left eye) from the optimum viewing distance d, expressed in units of subpixel widths. For example, as illustrated in FIG. 8, the phase is expressed as 5, 6, 7, 0, or another value for each subpixel. For the ideal parallax barrier 6, the phases are determined to be values repeated in specific cycles across the entire display panel 5.

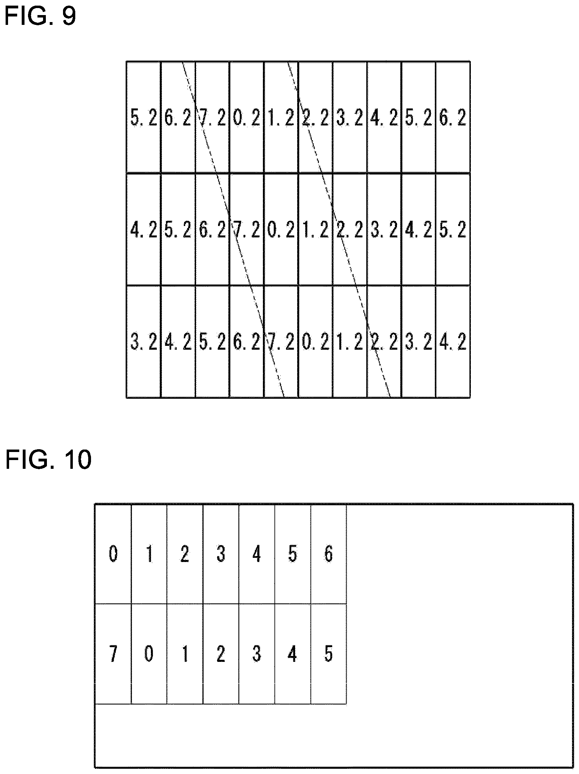

As the first eye (e.g., the left eye) moves, the phases change to, for example, 5.2, 6.2, 7.2, 0, and other values, as illustrated in FIG. 9. When the first (or second) eye does not move, phase displacements with the actual parallax barrier 6 are larger in areas nearer the edges of the display panel 5. To remove such displacements, for example, the first image (or the second image) for the first eye (or for the second eye) is assigned to subpixels with phases 6.5 to 1.5 to produce a locally updated composite image for each pupil position.

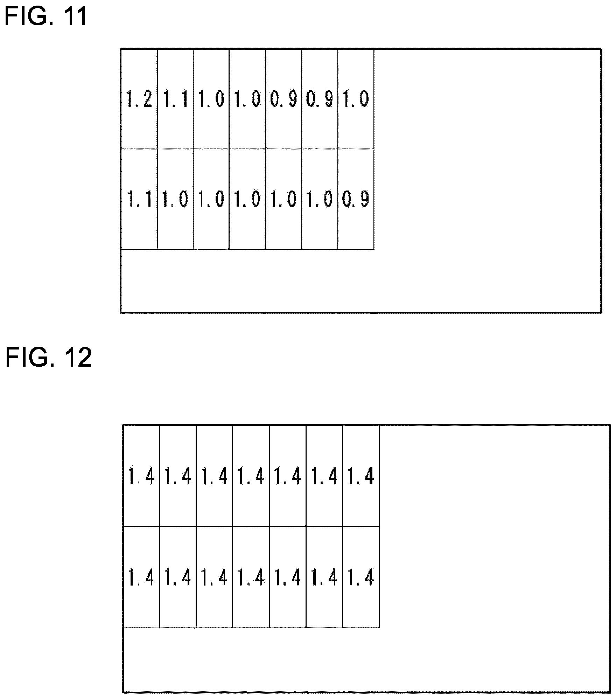

FIG. 10 is a diagram of phases with the ideal parallax barrier 6 for subpixels in the display panel 5. FIG. 11 is a diagram of displacement phases from the ideal parallax barrier 6. FIG. 12 is a diagram of phases for different eye positions. Under an ideal condition, with all the transmissive portions 62 in the parallax barrier 6 located to correspond to all the subpixels in the entire display panel 5, or in other words, with the designed positional relationships, the phases are expressed with cyclic values as illustrated in FIG. 10. In actual use, mechanical dimensional errors may occur in the assembled display panel 5 with the parallax barrier 6 stacked on the display panel 5.

When the eyes move in x- and y-directions at the optimum viewing distance d, the parallax barrier 6 and the pixels are controlled to have the same value, as illustrated in FIG. 12. However, when any pitch deviation occurs, the phases of the subpixels change differently with respect to the corresponding transmissive portions 62.

For mounting the parallax barrier 6 onto the display panel 5, the displacement of the subpixels with respect to each transmissive portion 62 in the parallax barrier 6 from the ideal value may be measured in phase and stored in the above table as a value for each subpixel. The values are stored in the table as real numbers. Any real number exceeding the cycle T may be decreased in unit cycles before being stored. The real number may be a non-integer but may be a decimal number.

A 3D display method according to one or more embodiments of the present disclosure will be described. In the present embodiment, the 3D display method includes causing the multiple subpixels in the display panel 5 including the active area 51 including the multiple divisional display portions to display the first image and the second image having parallax with the first image, defining, with the multiple transmissive portions 62 in the parallax barrier 6 being an optical element, the traveling direction of image light to be emitted from each of the multiple subpixels, obtaining, with the obtainer 3, the position of a first eye (e.g., left eye) of a viewer and the position of a second eye (e.g., right eye) of the viewer different from the first eye, and causing, with the controller 7, the first image and the second image to be displayed alternately in the active area 51 based on the position of the first eye and the position of the second eye.

The controller 7 assigns each of the multiple subpixels to display the first image or the second image based on I + {L/(T × V)}, where I is a value indicating a displacement of each of the multiple transmissive portions 62 from the corresponding subpixel of the multiple subpixels, L is a distance by which the first eye and the second eye move in the parallax direction, T is a switching cycle between the first image and the second image, and V is the number of variations of an index value indicating a position of switching between the first image and the second image. The 3D display method according to the present embodiment is implementable with a computer program executable by the controller 7.

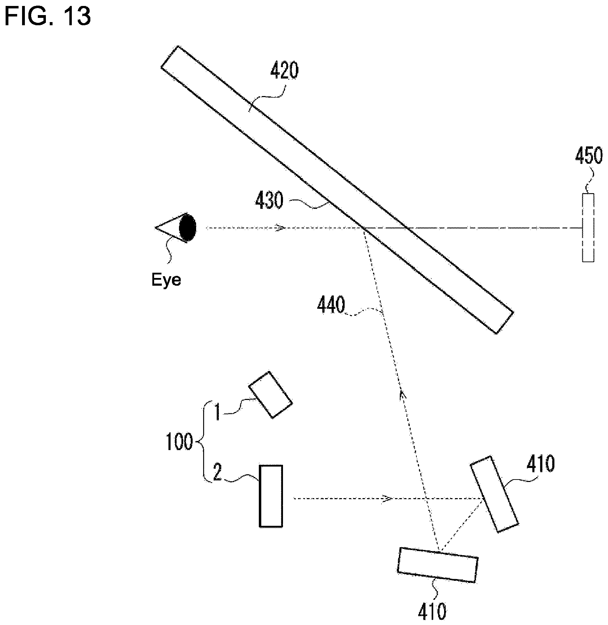

As illustrated in FIG. 13, the 3D display system 100 may be included in a head-up display system 400. The head-up display system 400 is also referred to as an HUD 400. The HUD 400 includes the 3D display system 100, an optical member 410, and a projection reception member 420 including a projection screen 430. The HUD 400 directs image light from the 3D display system 100 to reach the projection reception member 420 through the optical member 410. The HUD 400 directs image light reflected from the projection reception member 420 to reach the first eye and the right eye of the viewer. In other words, the HUD 400 directs the image light to travel from the 3D display system 100 to the first eye and the right eye of the viewer along an optical path 440 indicated by a broken line. The viewer can thus view image light reaching the eyes along the optical path 440 as a virtual image 450.

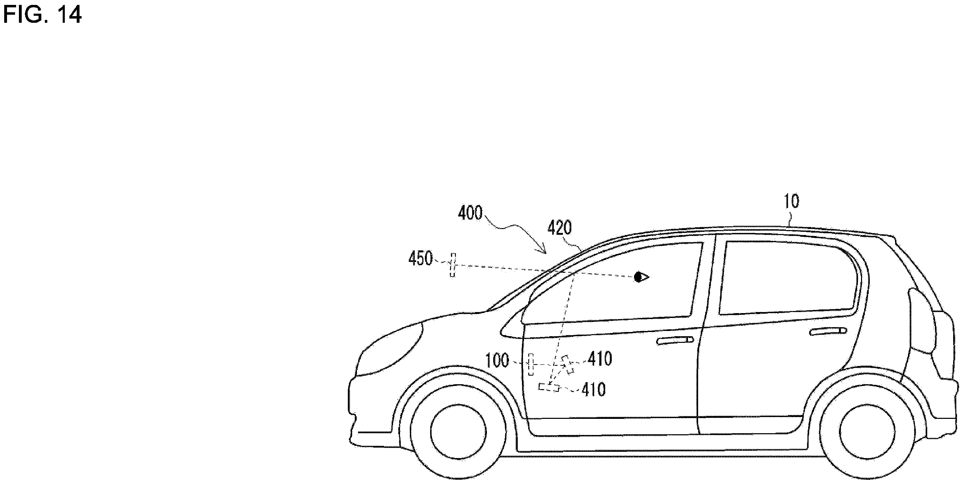

As illustrated in FIG. 14, the HUD 400 including the 3D display system 200 may be mounted on a movable body 10. The HUD 400 may include components that also serve as other devices or components included in the movable body 10. For example, the movable body 10 may use a windshield as the projection reception member 420. The devices or components of the movable body 10 serving as devices or components included in the HUD 400 may be referred to as HUD modules or 3D display components. The HUD 400 and the 3D display system 100 may be mounted on the movable body 10. Examples of the movable body according to one or more embodiments of the present disclosure include a vehicle, a vessel, and an aircraft. Examples of the vehicle in the present disclosure include, but are not limited to, an automobile and an industrial vehicle, and may also include a railroad vehicle, a community vehicle, and a fixed-wing aircraft traveling on a runway.

Examples of the automobile include, but are not limited to, a passenger vehicle, a truck, a bus, a motorcycle, and a trolley bus, and may also include another vehicle traveling on a road. Examples of the industrial vehicle include an industrial vehicle for agriculture and an industrial vehicle for construction. Examples of the industrial vehicle include, but are not limited to, a forklift and a golf cart. Examples of the industrial vehicle for agriculture include, but are not limited to, a tractor, a cultivator, a transplanter, a binder, a combine, and a lawn mower. Examples of the industrial vehicle for construction include, but are not limited to, a bulldozer, a scraper, a power shovel, a crane vehicle, a dump truck, and a road roller. Examples of the vehicle include man-powered vehicles. The classification of the vehicle is not limited to the above examples. Examples of the automobile may include an industrial vehicle travelling on a road, and one type of vehicle may fall within multiple classes. Examples of the vessel in the present disclosure include a jet ski, a boat, and a tanker. Examples of the aircraft in the present disclosure include a fixed-wing aircraft and a rotary-wing aircraft.

Examples of the vehicle in the present disclosure include, but are not limited to, an automobile and an industrial vehicle, and may also include a railroad vehicle, a community vehicle, and a fixed-wing aircraft traveling on a runway. Examples of the automobile include, but are not limited to, a passenger vehicle, a truck, a bus, a motorcycle, and a trolley bus, and may also include another vehicle traveling on a road. Examples of the industrial vehicle include an industrial vehicle for agriculture and an industrial vehicle for construction. Examples of the industrial vehicle include, but are not limited to, a forklift and a golf cart. Examples of the industrial vehicle for agriculture include, but are not limited to, a tractor, a cultivator, a transplanter, a binder, a combine, and a lawn mower. Examples of the industrial vehicle for construction include, but are not limited to, a bulldozer, a scraper, a power shovel, a crane vehicle, a dump truck, and a road roller. Examples of the vehicle include man-powered vehicles. The classification of the vehicle is not limited to the above examples. Examples of the automobile may include an industrial vehicle travelling on a road, and one type of vehicle may fall within multiple classes. Examples of the vessel in the present disclosure include a jet ski, a boat, and a tanker. Examples of the aircraft in the present disclosure include a fixed-wing aircraft and a rotary-wing aircraft.

The present disclosure may be implemented in the following forms.

In one or more embodiments of the present disclosure, a three-dimensional display device includes a display panel including an active area including a plurality of divisional display portions to cause a plurality of subpixels to display a first image and a second image having parallax with the first image, an optical element including a plurality of transmissive portions defining a traveling direction of image light to be emitted from each of the plurality of subpixels, an obtainer that obtains a position of a first eye of a viewer and a position of a second eye of the viewer different from the first eye, and a controller that causes the first image and the second image to be displayed alternately in the active area based on the position of the first eye and the position of the second eye The controller assigns each of the plurality of subpixels to display the first image or the second image based on I + {L/(T × V)}, where I is a value indicating a displacement of each of the plurality of transmissive portions from a corresponding subpixel of the plurality of subpixels, L is a distance by which the first eye and the second eye move in a direction of the parallax, T is a switching cycle between the first image and the second image, and V is a number of variations of an index value indicating a position of switching between the first image and the second image in the active area.

In one or more embodiments of the present disclosure, a three-dimensional display method includes causing a plurality of subpixels in a display panel including an active area including a plurality of divisional display portions to display a first image and a second image having parallax with the first image, defining, with a plurality of transmissive portions in an optical element, a traveling direction of image light to be emitted from each of the plurality of subpixels, obtaining, with an obtainer, a position of a first eye of a viewer and a position of a second eye of the viewer different from the first eye, and causing, with a controller, the first image and the second image to be displayed alternately in the active area based on the position of the first eye and the position of the second eye. The controller assigns each of the plurality of subpixels to display the first image or the second image based on I + {L/(T × V)}, where I is a value indicating a displacement of each of the plurality of transmissive portions from a corresponding subpixel of the plurality of subpixels, L is a distance by which the first eye and the second eye move in a direction of the parallax, T is a switching cycle between the first image and the second image, and V is a number of variations of an index value indicating a position of switching between the first image and the second image.

In one or more embodiments of the present disclosure, a three-dimensional display system includes the above three-dimensional display device.

In one or more embodiments of the present disclosure, a movable body includes the above three-dimensional display device.

The structure according to one or more embodiments of the present disclosure allows the viewer to appropriately view a 3D image.

Although embodiments of the present disclosure have been described in detail, the present disclosure is not limited to the embodiments described above, and may be changed or modified in various manners without departing from the spirit and scope of the present disclosure. The components described in the above embodiments may be entirely or partially combined as appropriate unless any contradiction arises.

REFERENCE SIGNS

1 detector
2 three-dimensional (3D) display device
3 obtainer
4 illuminator
5 display panel
6 parallax barrier
7 controller
8 memory
10 movable body
51 active area
51 aL first viewable portion
51aR second viewable portion
5 1bL first less-viewable portion
5 1bR second less-viewable portion
51aLR binocular viewable portion

5 1bLR binocular less-viewable portion
60 parallax barrier
61 light-blocking portion
62 transmissive portion
100 three-dimensional (3D) display system
400 head-up display (HUD) system
410 optical member
420 projection reception member
430 projection screen
440 optical path
450 virtual image

**Claims**

1. A three-dimensional display device, comprising:

   a display panel configured to cause a plurality of subpixels to display a first image and a second image having parallax with the first image, the display panel including an active area including a plurality of divisional display portions;
   an optical element including a plurality of transmissive portions defining a traveling direction of image light to be emitted from each of the plurality of subpixels;
   an obtainer configured to obtain a position of a first eye of a viewer and a position of a second eye of the viewer different from the first eye; and
   a controller configured to cause the first image and the second image to be displayed alternately in the active area based on the position of the first eye and the position of the second eye,
   wherein the controller assigns each of the plurality of subpixels to display the first image or the second image based on $I + \{L/(T \times V)\}$, where $I$ is a value indicating a displacement of each of the plurality of transmissive portions from a corresponding subpixel of the plurality of subpixels, $L$ is a distance by which the first eye and the second eye move in a direction of the parallax, $T$ is a switching cycle between the first image and the second image, and $V$ is a number of variations of an index value indicating a position of switching between the first image and the second image in the active area.

2. The three-dimensional display device according to claim 1, further comprising:

   a memory configured to store a table showing a correspondence between the positions of the first eye and the second eye and an image to be displayed by the plurality of subpixels included in the active area, the second eye being at a reference distance from the position of the first eye,
   wherein the controller uses the table to determine a first subpixel based on the position of the first eye and determine a second subpixel based on the position of the second eye.

3. The three-dimensional display device according to claim 1 or claim 2, wherein
   the controller causes the first image or the second image to be displayed as a third image based on a characteristic of the viewer.

4. The three-dimensional display device according to claim 3, wherein
   the controller displays, as the third image, an average image having an average luminance value of the first image and the second image.

5. The three-dimensional display device according to any one of claims 1 to 4, wherein
   the controller causes the first image to be displayed using, as the position of the first eye, a first projection position at which the position of the first eye is projected on a plane parallel to the active area and located at an optimum viewing distance from the optical element, and the second image to be displayed using, as the position of the second eye, a second projection position at which the position of the second eye is projected on the plane.

6. The three-dimensional display device according to any one of claims 1 to 5, wherein
   the controller uses values of the displacement $I$ of transmissive portions from subpixels at at least three points at a center of the active area, a first outer edge being a farthest point from the center in the direction of the parallax toward the first eye, and a second outer edge being a farthest point from the center in the direction of the parallax toward the second eye to assign each of the plurality of subpixels to display the first image or the second image.

7. A three-dimensional display method, comprising:

causing a plurality of subpixels in a display panel to display a first image and a second image having parallax with the first image, the display panel including an active area including a plurality of divisional display portions;
defining, with a plurality of transmissive portions in an optical element, a traveling direction of image light to be emitted from each of the plurality of subpixels;
obtaining, with an obtainer, a position of a first eye of a viewer and a position of a second eye of the viewer different from the first eye; and
causing, with a controller, the first image and the second image to be displayed alternately in the active area based on the position of the first eye and the position of the second eye,
wherein the controller assigns each of the plurality of subpixels to display the first image or the second image based on $I + \{L/(T \times V)\}$, where I is a value indicating a displacement of each of the plurality of transmissive portions from a corresponding subpixel of the plurality of subpixels, L is a distance by which the first eye and the second eye move in a direction of the parallax, T is a switching cycle between the first image and the second image, and V is a number of variations of an index value indicating a position of switching between the first image and the second image.

8. A three-dimensional display system, comprising:
the three-dimensional display device according to any one of claims 1 to 6.

9. A movable body, comprising:
the three-dimensional display device according to any one of claims 1 to 6.

FIG. 1

100

Right eye

Left eye

$E0$

$d$

Detector — 1

Obtainer — 3

Controller — 7

Memory — 8

$g$

61
6
62

Bp

51aL 51aR 51aL 51aR 51aL 51aR

4
5
51

$n \times Hp$

2

## FIG. 2

EP 4 220 621 A1

2×n×Hp

Hp

Pg

5

Pg

Pg

52

51

| P1 | P2 | P3 | P4 | P5 | P6 | P7 | P8 | P9 | P10 | P11 | P12 | P1 | P2 | P3 | P4 | P5 | P6 | P7 | P8 | P9 | P10 | P11 | P12 |
|----|----|----|----|----|----|----|----|----|-----|-----|-----|----|----|----|----|----|----|----|----|----|-----|-----|-----|
| P12 | P1 | P2 | P3 | P4 | P5 | P6 | P7 | P8 | P9 | P10 | P11 | P12 | P1 | P2 | P3 | P4 | P5 | P6 | P7 | P8 | P9 | P10 | P11 |
| P11 | P12 | P1 | P2 | P3 | P4 | P5 | P6 | P7 | P8 | P9 | P10 | P11 | P12 | P1 | P2 | P3 | P4 | P5 | P6 | P7 | P8 | P9 | P10 |
| P10 | P11 | P12 | P1 | P2 | P3 | P4 | P5 | P6 | P7 | P8 | P9 | P10 | P11 | P12 | P1 | P2 | P3 | P4 | P5 | P6 | P7 | P8 | P9 |
| P9 | P10 | P11 | P12 | P1 | P2 | P3 | P4 | P5 | P6 | P7 | P8 | P9 | P10 | P11 | P12 | P1 | P2 | P3 | P4 | P5 | P6 | P7 | P8 |
| P8 | P9 | P10 | P11 | P12 | P1 | P2 | P3 | P4 | P5 | P6 | P7 | P8 | P9 | P10 | P11 | P12 | P1 | P2 | P3 | P4 | P5 | P6 | P7 |
| P7 | P8 | P9 | P10 | P11 | P12 | P1 | P2 | P3 | P4 | P5 | P6 | P7 | P8 | P9 | P10 | P11 | P12 | P1 | P2 | P3 | P4 | P5 | P6 |

FIG. 3

EP 4 220 621 A1

## FIG. 4

| P1 L | P2 L | P3 L | P4 L | P5 L | P6 L | P7 R | P8 R | P9 R | P10 R | P11 R | P12 R | P1 L | P2 L | P3 L | P4 L | P5 L | P6 L | P7 R | P8 R | P9 R | P10 R | P11 R | P12 R |
|---|---|---|---|---|---|---|---|---|---|---|---|---|---|---|---|---|---|---|---|---|---|---|---|
| P6 L | P1 L | P2 L | P3 L | P4 L | P5 L | P6 L | P7 R | P8 R | P9 R | P10 R | P11 R | P12 R | P1 L | P2 L | P3 L | P4 L | P5 L | P6 L | P7 R | P8 R | P9 R | P10 R | P11 R |
| P5 L | P6 L | P1 L | P2 L | P3 L | P4 L | P5 L | P6 L | P7 R | P8 R | P9 R | P10 R | P11 R | P12 R | P1 L | P2 L | P3 L | P4 L | P5 L | P6 L | P7 R | P8 R | P9 R | P10 R |
| P4 L | P5 L | P6 L | P1 L | P2 L | P3 L | P4 L | P5 L | P6 L | P7 R | P8 R | P9 R | P10 R | P11 R | P12 R | P1 L | P2 L | P3 L | P4 L | P5 L | P6 L | P7 R | P8 R | P9 R |
| P3 L | P4 L | P5 L | P6 L | P1 L | P2 L | P3 L | P4 L | P5 L | P6 L | P7 R | P8 R | P9 R | P10 R | P11 R | P12 R | P1 L | P2 L | P3 L | P4 L | P5 L | P6 L | P7 R | P8 R |
| P2 L | P3 L | P4 L | P5 L | P6 L | P1 L | P2 L | P3 L | P4 L | P5 L | P6 L | P7 R | P8 R | P9 R | P10 R | P11 R | P12 R | P1 L | P2 L | P3 L | P4 L | P5 L | P6 L | P7 R |
| P1 L | P2 L | P3 L | P4 L | P5 L | P6 L | P1 L | P2 L | P3 L | P4 L | P5 L | P6 L | P7 R | P8 R | P9 R | P10 R | P11 R | P12 R | P1 L | P2 L | P3 L | P4 L | P5 L | P6 L |

51bL (51aR)  51aL (51bR)  51bL (51aR)  51aL (51bR)

FIG. 5

| P1 L | P2 L | P3 L | P4 L | P5 L | P6 L | P7 R | P8 R | P9 R | P10 R | P11 R | P12 R | P1 L | P2 L | P3 L | P4 L | P5 L | P6 L | P7 R | P8 R | P9 R | P10 R | P11 R | P12 R |
|---|---|---|---|---|---|---|---|---|---|---|---|---|---|---|---|---|---|---|---|---|---|---|---|
| P6 L | P1 L | P2 L | P3 L | P4 L | P5 L | P6 L | P7 R | P8 R | P9 R | P10 R | P11 R | P12 R | P1 L | P2 L | P3 L | P4 L | P5 L | P6 L | P7 R | P8 R | P9 R | P10 R | P11 R |
| P5 L | P6 L | P1 L | P2 L | P3 L | P4 L | P5 L | P6 L | P7 R | P8 R | P9 R | P10 R | P11 R | P12 R | P1 L | P2 L | P3 L | P4 L | P5 L | P6 L | P7 R | P8 R | P9 R | P10 R |
| P4 L | P5 L | P6 L | P1 L | P2 L | P3 L | P4 L | P5 L | P6 L | P7 R | P8 R | P9 R | P10 R | P11 R | P12 R | P1 L | P2 L | P3 L | P4 L | P5 L | P6 L | P7 R | P8 R | P9 R |
| P3 L | P4 L | P5 L | P6 L | P1 L | P2 L | P3 L | P4 L | P5 L | P6 L | P7 R | P8 R | P9 R | P10 R | P11 R | P12 R | P1 L | P2 L | P3 L | P4 L | P5 L | P6 L | P7 R | P8 R |
| P2 L | P3 L | P4 L | P5 L | P6 L | P1 L | P2 L | P3 L | P4 L | P5 L | P6 L | P7 R | P8 R | P9 R | P10 R | P11 R | P12 R | P1 L | P2 L | P3 L | P4 L | P5 L | P6 L | P7 R |
| P1 L | P2 L | P3 L | P4 L | P5 L | P6 L | P1 L | P2 L | P3 L | P4 L | P5 L | P6 L | P7 R | P8 R | P9 R | P10 R | P11 R | P12 R | P1 L | P2 L | P3 L | P4 L | P5 L | P6 L |

51aR (51bL)     51bR (51aL)     51aR (51bL)     51bR (51aL)

EP 4 220 621 A1

FIG. 6

EP 4 220 621 A1

FIG. 7

| 5 | 6 | 7 | 0 | 1 | 2 | 3 | 4 | 5 | 6 |
|---|---|---|---|---|---|---|---|---|---|
| 4 | 5 | 6 | 7 | 0 | 1 | 2 | 3 | 4 | 5 |
| 2 | 3 | 4 | 5 | 6 | 7 | 0 | 1 | 2 | 3 |

| 5 | 6 | 7 | 0 | 1 | 2 | 3 | 4 | 5 | 6 |
|---|---|---|---|---|---|---|---|---|---|
| 4 | 5 | 6 | 7 | 0 | 1 | 2 | 3 | 4 | 5 |
| 2 | 3 | 4 | 5 | 6 | 7 | 0 | 1 | 2 | 3 |

| 5 | 6 | 7 | 0 | 1 | 2 | 3 | 4 | 5 | 6 |
|---|---|---|---|---|---|---|---|---|---|
| 4 | 5 | 6 | 7 | 0 | 1 | 2 | 3 | 4 | 5 |
| 2 | 3 | 4 | 5 | 6 | 7 | 0 | 1 | 2 | 3 |

FIG. 8

| 5 | 6 | 7 | 0 | 1 | 2 | 3 | 4 | 5 | 6 |
|---|---|---|---|---|---|---|---|---|---|
| 4 | 5 | 6 | 7 | 0 | 1 | 2 | 3 | 4 | 5 |
| 3 | 4 | 5 | 6 | 7 | 0 | 1 | 2 | 3 | 4 |

FIG. 9

| 5.2 | 6.2 | 7.2 | 0.2 | 1.2 | 2.2 | 3.2 | 4.2 | 5.2 | 6.2 |
|-----|-----|-----|-----|-----|-----|-----|-----|-----|-----|
| 4.2 | 5.2 | 6.2 | 7.2 | 0.2 | 1.2 | 2.2 | 3.2 | 4.2 | 5.2 |
| 3.2 | 4.2 | 5.2 | 6.2 | 7.2 | 0.2 | 1.2 | 2.2 | 3.2 | 4.2 |

FIG. 10

| 0 | 1 | 2 | 3 | 4 | 5 | 6 |
|---|---|---|---|---|---|---|
| 7 | 0 | 1 | 2 | 3 | 4 | 5 |

## FIG. 11

| 1.2 | 1.1 | 1.0 | 1.0 | 0.9 | 0.9 | 1.0 |
|-----|-----|-----|-----|-----|-----|-----|
| 1.1 | 1.0 | 1.0 | 1.0 | 1.0 | 1.0 | 0.9 |

## FIG. 12

| 1.4 | 1.4 | 1.4 | 1.4 | 1.4 | 1.4 | 1.4 |
|-----|-----|-----|-----|-----|-----|-----|
| 1.4 | 1.4 | 1.4 | 1.4 | 1.4 | 1.4 | 1.4 |

FIG. 13

FIG. 14

## INTERNATIONAL SEARCH REPORT

| | International application No. |
|---|---|
| | **PCT/JP2021/034766** |

**A. CLASSIFICATION OF SUBJECT MATTER**

*G09G 5/00*(2006.01)i; *G09G 5/36*(2006.01)i; *G09G 3/20*(2006.01)i; *G09F 9/00*(2006.01)i; *G09F 9/40*(2006.01)i; *G02F 1/13*(2006.01)i; *G02F 1/133*(2006.01)i; *G02B 27/01*(2006.01)i; *G02B 30/30*(2020.01)i; *H04N 13/31*(2018.01)i; *H04N 13/317*(2018.01)i; *H04N 13/366*(2018.01)i

FI: G09G3/20 660X; G02F1/13 505; G02F1/133 505; G02B30/30; G02B27/01; G09F9/40 301; G09F9/00 361; G09G3/20 680B; G09G5/36 510V; G09G5/00 550C; G09G3/20 611D; G09G3/20 631V; G09G5/00 550X; G09G3/20 612U; H04N13/366; H04N13/317; H04N13/31

According to International Patent Classification (IPC) or to both national classification and IPC

**B. FIELDS SEARCHED**

Minimum documentation searched (classification system followed by classification symbols)

G09G5/00; G09G5/36; G09G3/20; G09F9/00; G09F9/40; G02F1/13; G02F1/133; G02B27/01; G02B30/30; H04N13/31; H04N13/317; H04N13/366

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2020/004276 A1 (KYOCERA CORP) 02 January 2020 (2020-01-02) entire text, all drawings | 1-9 |
| A | JP 2002-182153 A (MIXED REALITY SYSTEMS LABORATORY INC) 26 June 2002 (2002-06-26) entire text, all drawings | 1-9 |
| A | US 2017/0124748 A1 (ARM LIMITED) 04 May 2017 (2017-05-04) entire text, all drawings | 1-9 |
| A | US 2015/0281679 A1 (QUALCOMM INCORPORATED) 01 October 2015 (2015-10-01) entire text, all drawings | 1-9 |
| A | CN 109344665 A (BOE TECHNOLOGY GROUP CO LTD) 15 February 2019 (2019-02-15) entire text, all drawings | 1-9 |

☑ Further documents are listed in the continuation of Box C.    ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **03 December 2021** | **14 December 2021** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT

| International application No. |
| --- |
| **PCT/JP2021/034766** |

### C. DOCUMENTS CONSIDERED TO BE RELEVANT

| Category* | Citation of document, with indication, where appropriate, of the relevant passages | Relevant to claim No. |
| --- | --- | --- |
| A | CN 109284640 A (SUPERD CO LTD) 29 January 2019 (2019-01-29)<br>entire text, all drawings | 1-9 |

Form PCT/ISA/210 (second sheet) (January 2015)

# EP 4 220 621 A1

| INTERNATIONAL SEARCH REPORT | | | | International application No. | |
|---|---|---|---|---|---|
| **Information on patent family members** | | | | **PCT/JP2021/034766** | |
| Patent document cited in search report | | | Publication date (day/month/year) | Patent family member(s) | Publication date (day/month/year) |
| WO | 2020/004276 | A1 | 02 January 2020 | EP 3817380 A1<br>entire text, all drawings | |
| JP | 2002-182153 | A | 26 June 2002 | (Family: none) | |
| US | 2017/0124748 | A1 | 04 May 2017 | GB 2546720 A<br>entire text, all drawings | |
| US | 2015/0281679 | A1 | 01 October 2015 | WO 2015/148186 A1<br>entire text, all drawings | |
| CN | 109344665 | A | 15 February 2019 | (Family: none) | |
| CN | 109284640 | A | 29 January 2019 | (Family: none) | |

Form PCT/ISA/210 (patent family annex) (January 2015)